# EUROPÄISCHE PATENTANMELDUNG

(11) **EP 2 559 671 A1**
(43) Veröffentlichungstag der Anmeldung: **20.02.2013**
(21) Anmeldenummer: 12180703.6
(22) Anmeldetag: 16.08.2012
(51) Int. Cl.: C03C 17/00, C03C 17/34

(54) **Glaskeramik, die wenigstens teilweise mit einer Hartstoffschicht versehen ist**

(30) Priorität: 19.08.2011 DE 102011081234
(71) Anmelder: Schott AG, 55122 Mainz (DE)
(72) Erfinder: Damm, Dr. Thorsten, 55268 Nieder-Olm (DE); Hack, Dr. Hrabanus, 55126 Mainz (DE); Henn, Christian, 55546 Frei-Laubersheim (DE)

(57) **Zusammenfassung**

Glaskeramik, die wenigstens teilweise mit einer vor äußeren mechanischen Einflüssen schützenden Hartstoffschicht versehen ist, wobei die Hartstoffschicht wenigstens zwei nebeneinanderliegende, miteinander vermischte Materialphasen enthält, wobei wenigstens eine nanokristalline Phase und eine amorphe Phase vorhanden sind, die Hartstoffschicht eine Härte von wenigstens 26 GPa und eine Schichtdicke von wenigstens 0,5 µm aufweist, die Hartstoffschicht im Temperaturbereich von 200 °C bis 1000°C chemisch beständig ist und, dass der thermischen Ausdehnungskoeffizienten α der Glaskeramik sich nicht mehr als +/- 20 % vom thermischen Ausdehnungskoeffizienten α der Hartstoffschicht unterscheidet.

## Beschreibung

Die Erfindung betrifft eine Glaskeramik, die wenigstens teilweise mit einer vor äußeren mechanischen Einflüssen schützenden Hartstoffschicht versehen ist.

Um beispielsweise die edle Anmutung von Kochflächen aus Glaskeramik auch nach mehreren Jahren des Gebrauchs zu erhalten, muss die Oberfläche der Glaskeramik vor äußeren mechanischen Einflüssen geschützt werden. Bereits beim normalen Gebrauch können durch das Verschieben von Gegenständen (Töpfe, Schüsseln, etc.) auf der Oberfläche der Glaskeramik Kratzer entstehen, die das Erscheinungsbild negativ beeinflussen und die leichte Reinigbarkeit und mechanische Beständigkeit der Oberfläche beeinträchtigen. Aus diesem Grund werden Kochflächen aus Glaskeramik mit einer vor äußeren mechanischen Einflüssen schützenden Hartstoffschicht versehen. So sind bereits hartstoffbeschichtete Glaskeramikartikel aus der Schrift WO 2009/010180 A1 bekannt. Um einen Glaskeramikartikel vor äußeren mechanischen Einflüssen zu schützen, wird in dieser Schrift vorgeschlagen, eine Siliziumnitridschicht als Hartstoffschicht auf einem Glaskeramiksubstrat abzuscheiden, wobei die Siliziumnitridschicht im Volumen eine röntgenamorphe Morphologie aufweisen soll.

Beschichtete Glassubstrate sind aus der Schrift EP 1 705 162 A1 beschichtete Substrate aus Glas oder Glaskeramik aus der Schrift EP 1 514 852 A1 bekannt.

Ausgehend von diesem Stand der Technik ist es Aufgabe der Erfindung, verbesserte Glaskeramiken bereitzustellen, die wenigstens teilweise mit einer vor äußeren mechanischen Einflüssen schützenden Hartstoffschicht versehen sind. Die Glaskeramiken sollen noch besser und dauerhafter als bisher vor äußeren mechanischen Einflüssen geschützt werden und den Belastungen im täglichen Gebrauch einen optimalen mechanischen Widerstand bieten. Auch das Reinigen mit abrassiven Reinigungsmitteln, wie SiC-haltigen Flüssigkeiten, SiC-haltigen Schwämmen oder SiC-haltigen Reinigungstüchern, soll die Oberfläche der Glaskeramik schadfrei überstehen.

Weiterhin ist es Aufgabe der Erfindung, die Glaskeramik an die jeweiligen optischen Anforderungen anzupassen.

Gelöst wird die Aufgabe gemäß Anspruch 1 durch eine Glaskeramik, die wenigstens teilweise mit einer vor äußeren mechanischen Einflüssen schützenden Hartstoffschicht versehen ist, wobei
- die Hartstoffschicht wenigstens zwei nebeneinanderliegende, miteinander vermischte Materialphasen enthält,
- wenigstens eine nanokristalline Phase und eine amorphe Phase vorhanden sind,
- die Hartstoffschicht eine Härte von wenigstens 26 GPa und eine Schichtdicke von wenigstens 0,5 µm aufweist,
- die Hartstoffschicht im Temperaturbereich von 200 °C bis 1000 °C chemisch beständig ist, und
- der thermischen Ausdehnungskoeffizienten α der Glaskeramik sich nicht mehr als +/- 20 % vom thermischen Ausdehnungskoeffizienten α der Hartstoffschicht unterscheidet.

Es hat sich in Vergleichsversuchen gezeigt, dass die erfindungsgemäß beschichteten Glaskeramiken besser und dauerhafter gegen äußere mechanische Einflüsse geschützt werden können, als dies bisher nach dem oben genannten Stand der Technik möglich war.

Der thermischen Ausdehnungskoeffizienten α der Glaskeramik unterscheidet sich insbesondere nicht mehr als +/- 20 % vom thermischen Ausdehnungskoeffizienten α der Hartstoffschicht im Temperaturbereich von 200 °C bis 1000 °C.

Der thermische Ausdehnungskoeffizienten α der Glaskeramik unterscheidet sich besonders bevorzugt nicht mehr als +/- 10 % vom thermischen Ausdehnungskoeffizienten α der Hartstoffschicht.

Unter dem Begriff Glas wird im Allgemeinen Kalk-Natron-Glas (KN-Glas) verstanden, das einen hohen thermischen Ausdehnungskoeffizienten α von etwa 9,0 x 10⁻⁶/K hat. Die thermischen Ausdehnungskoeffizienten α der Schichtmaterialien können identisch sein (z.B. α TiN: 9,35 x 10⁻⁶/K) oder auch erheblich davon abweichen (α Si3N4: ca. 3 x 10⁻⁶/K, α AlN: ca. 4 x 10⁻⁶/K). Je größer die Differenz der thermischen Ausdehnungskoeffizienten α von Schicht und Substrat, desto mehr Spannung wird an der Grenzfläche aufgebaut. Bei zu großem Unterschied kommt es zur Delamination. Wird das beschichtete KN-Glas hoher Temperatur ausgesetzt so dehnt es sich stärker aus *als* die Schicht, was zu einer zusätzlichen Spannung an der Grenzfläche Glas/Schicht führt, und die Delamination begünstigt. Die Verwendung einer nahezu nullausdehnenden Glaskeramik ist für die Verwendung im Hochtemperaturbereich aus zwei Gründen vorteilhaft: dieses Substrat kann bei wesentlich höheren Temperaturen als normales Glas eingesetzt werden, und die geringere thermische Ausdehnung α des Substrates verursacht eine wesentlich geringere Spannung an der Grenzfläche zur Beschichtung, wodurch die Gefahr der Delamination gering ist. Es ist einsichtig, dass die starke thermische Ausdehnung α eines Glassubstrates die Schicht ebenfalls stark dehnt, wodurch es leicht zur Rissbildung kommt und das Eindringen von Luftfeuchtigkeit die Schichtdelamination begünstigt. Dehnt sich hingegen das Substrat weniger aus als die Schicht, führt das zu einer (in Sputterschichten herstellungsbedingt bereits vorhandenen) Druckspannung, jedoch nicht zu einer starken mechanischen Verformung.
Vorzugsweise ist die mittlere Korngröße der nanokristallinen Phase kleiner als 1000 nm, bevorzugt kleiner als 100 nm, und besonders bevorzugt 1 nm bis 50 nm.

In einer weiter bevorzugten Ausführungsform umgibt die amorphe Phase im Wesentlichen die nanokristalline Phase. D.h. wenigstens 50 %, vorzugsweise wenigstens 75 % der Oberfläche der nanokristallinen Phase ist von der amorphen Phase umgeben. Die amorphe Phase bildet also eine Art Matrix, die die Kristallkörner der nanokristallinen Phase umgibt. Die außergewöhnlich hohe Härte der Schicht wird durch diese Nanostruktur erzeugt, die sowohl eine möglichst perfekt nanokristalline Phase und einen amorphe Phase (Matrix) aufweist.

In einer weiter bevorzugten Ausführungsform umgibt die amorphe Phase im Wesentlichen die nanokristalline Phase.

Vorzugsweise weist die Hartstoffschicht eine Licht-Transmission im Wellenlängenbereich von 380 nm bis 780 nm von wenigstens 80 % bei einer Schichtdicke von 1,0 µm auf.

Um einen guten und dauerhaften Schutz der Glaskeramik zu erhalten, besteht vorzugsweise die nanokristalline Phase und/oder die amorphe Phase aus einer nitridischen oder oxidischen Verbindung, insbesondere aus Aluminium-, Silizium-, Bor-, Zirkon-, und/oder Titannitrid und/oder-oxid oder die nanokristalline Phase umfasst eine nitridische bzw. oxidische Verbindung.

Weiterhin kann die Hartstoffschicht eine Härte von wenigstens 28 GPa, insbesondere von 30 GPa bis 50 GPa, aufweisen, um einen guten und dauerhaften Schutz zu erhalten.

Die Hartstoffschicht kann mit wenigstens einer weiteren Schicht, insbesondere einer Antireflexschicht versehen sein. Die Hartstoffschicht kann aber auch selbst Teil einer Antireflexschicht sein.

Die Antireflexschicht kann vollständig aus Nanokompositmaterialien bestehen.

Der Brechungsindex n_{D} einer bevorzugten Hartstoffschicht liegt in der Regel bei über 2,0. Daher ist die Hartstoffschicht optisch auffällig in Form einer leicht spiegelnden Oberfläche. Sollte diese Auffälligkeit unerwünscht sein, kann die Hartstoffschicht in ein Schichtsystem zur Reflexminderung, einer so genannten Antireflexschicht eingearbeitet oder mit einer Antireflexschicht versehen werden. Hierbei werden abwechselnd hoch- und niedrigbrechende Schichten, z.B. Hartstoffschicht und SiO₂-Schich in genau definierten Schichtdickenverhältnissen auf die Glaskeramik aufgebracht. Eine ausreichende Antireflexwirkung lässt sich bereits mit vier abwechselnden Schichten erzielen. Die oberste Schicht muss dabei aus dem niedrigbrechenden Material bestehen.

Vorzugsweise ist die Glaskeramik eine Kochfläche, eine Sichtscheibe, insbesondere eine Kaminsichtscheibe, eine Schutzscheibe oder eine Abdeckscheibe.

Die Glaskeramik ist bevorzugt eine Lithium-Aluminium-Silikat-Glaskeramik.

Die Hartstoffschicht weist bevorzugt eine Schichtdicke von wenigstens 0,5 µm, vorzugsweise von wenigstens 1,0 µm bis 10 µm, auf. Dabei gilt, je dicker die Schicht, desto härte ist sie. Die Schichtdicke kann in der Regel so gewählt werden, dass sie den jeweiligen mechanischen und/oder optischen Erfordernissen entspricht.

Ist die Hartstoffschicht Teil eines (optischen) Schichtsystems, z.B. einer Antireflexschicht, so liegt die Gesamtdicke des Systems typischerweise unter einem Mikrometer.

Damit die erfindungsgemäße Glaskeramik als solche erkennbar ist, insbesondere dass die erfindungsgemäße Glaskeramik wenigstens teilweise mit einer vor äußeren mechanischen Einflüssen schützenden Hartstoffschicht erkennbar versehen ist, wird vorzugsweise ein Brechungsindex n_{D} der Hartstoffsicht eingestellt, der über dem Brechungsindex n_{D} der jeweiligen Glaskeramik liegt. Vorzugsweise wird ein Brechungsindex n_{D} von über 1,44, besonders bevorzugt wird ein Brechungsindex n_{D} von über 1,49 eingestellt. Messwellenlänge Natrium-D-Linie 589 nm.

Bevorzugt wird die Hartstoffschicht wenigstens auf den Teil der Glaskeramik aufgebracht, der vor äußeren mechanischen Einflüssen geschützt werden soll.

Weiterhin können zwischen Glaskeramik und Hartstoffschicht wenigstens eine Haftvermittlerschicht, eine Barriereschicht und/oder eine Dekorschicht angeordnet sein.

Bei einer weiteren, erfindungsgemäßen Glaskeramik kann der der Anteil der kristallinen Phase größer als der der amorphen Phase in der Hartstoffschicht sein, insbesondere kann der Anteil der kristallinen Phase größer als 50 Mol-% sein und bevorzugt mindestens 75 Mol-% und besonders bevorzugt mindestens 85 Mol-% betragen, insbesondere um die Härten von wenigstens 26 GPa einfach zu erzielen.

Vorzugsweise weist die Hartstoffschicht eine Lichttransmission im Wellenlängenbereich von 1 µm bis 20 µm von mindestens 50 %, bevorzugt von mindestens 65 %, und besonders bevorzugt von mindestens 80 % auf. Die Beschichtung muss mit Materialien erfolgen, die im Wellenlängenbereich von 1 µm bis 20 µm eine hohe Transparenz aufweisen. Zum Beispiel erfüllen AlN und Si₃N₄ diese Anforderung. Die mittlere Transmission sollte über 50%, besser über 65%, noch besser über 80% liegen, wobei idealer Weise die Transmission im Bereich des Strahlungsmaximums am größten sein sollte.

Bei einer weiteren, erfindungsgemäßen Glaskeramik können die nanokristalline oder/und die amorphe Phase aus mehr als zwei Materialien bestehen.

Bei einer weiteren, erfindungsgemäßen Glaskeramik können die nanokristalline Phase aus hauptsächlich Aluminiumnitrid und die amorphe Phase hauptsächlich aus Siliziumnitrid bestehen und wenigstens eine der beiden Phasen neben Nitridionen auch Sauerstoffionen enthalten.

Die hohe Härte der Nanokompositschichten wird im Allgemeinen durch ein Zweiphasensystem erklärt, das aus zwei nicht ineinander mischbaren Materialien besteht. Verunreinigungen im Sub-Prozentbereich (Atomprozent) setzen die enormen Härten herab. Erstaunlicherweise zeigte sich, dass auch Oxi-Nitrid Systeme eine vergleichsweise hohe Härte aufweisen. Beispielsweise lassen sich mit dem System AlSiON Härten von über 26 GPa erzielen. Der Sauerstoffanteil lag bei bis zu 15 Mol-%. Während AlN und Si₃N₄ nicht ineinander mischbar sind, sind Al und Si sowie deren Oxide mischbar. Die genaue Ursache für die Härte ist nicht genau bekannt. Möglicherweise begünstigt etwas Sauerstoff das Wachstum von kleinen Kristalliten, indem es als Kristallisationskeim für das Wachstum dient.

### Ausführungsbeispiele

Glaskeramiken umfassend Hartstoffschichten, die insbesondere nichtoxidische, ternäre und quaternären Nanokomposite enthalten, wiesen herausragende mechanische, thermische und auch optische Eigenschaften auf. Unter Nanokompositen werden hier Materialsysteme, die wenigstens zwei Materialphasen mit einer mittleren Korngröße von kleiner als 1000 nm aufweisen, verstanden.

Schichthärten über 28 GPa, insbesondere im Bereich von 30 GPa bis 50 GPa, und thermischen Stabilitäten bis über 1000 °C konnten ohne weiters erzielt werden. Die besonderen Schichteigenschaften wurden insbesondere durch die Bildung sehr kleiner Kristallite, die in eine amorphe Matrix eingebettet sind, verursacht.

Die Kristallitgröße lag hierbei vorzugsweise im Bereich einiger Nanometer (insbesondere im Bereich von 5 nm bis 20 nm), die amorphe Matrix war vorzugsweise sehr dünn und umschloss die einzelnen Kristallite mit wenigen Lagen oder im Idealfall mit einer einzigen Monolage.

Hartstoffschichten aus den genannten Verbindungen, insbesondere (Nitride von Al, Si, B, Ti) ist gemein, dass sie hochbrechend sind, d.h. einen Brechungsindex größer als herkömmliche Glaskeramiksubstrate aufweisen. Dadurch wird Licht im sichtbaren Wellenlängenbereich verstärkt von der Hartstoffschicht reflektiert, weshalb die Hartstoffbeschichtung augenfällig ist.

Zur Herstellung der Hartstoffschichten wurden Nitride die Al, Si, B, Ti und Zr enthalten verwendet, als besonders geeignet haben sich die Kombinationen Al-Si-N und Si-B-C-N verwiesen.

Zur Ausbildung der besonders harten Nanokomposit war es notwendig, dass die verwendeten Materialien eine geringe Löslichkeit ineinander zeigten, wie z.B. Titannitrid und Siliziumnitrid oder Aluminiumnitrid und Siliziumnitrid. Mischphasen führten zu einer Reduktion der Härte.

Zur Aufbringung einer Hartstoffschicht mit der geforderten Nanostruktur eignete sich unter anderem das Sputterverfahren. Dabei soll die Deposition der Hartstoffschicht fernab des thermodynamischen Gleichgewichts stattfinden, um nicht bloß eine einfache "Legierung" der Materialien herzustellen. Vorteilhaft war also eine Hartsoffbeschichtung bei erhöhter Temperatur (>100°C, bevorzugt >200°C, besonders bevorzugt >300°C) und/oder eine Beschichtung mit Unterstützung von lonenbeschuss (z.B. aus einer lonenstrahlquelle oder durch Anlegen eines Substrat-Bias).

Hochenergetische Partikel beim Sputterprozess konnten auch durch das HiPIMS-Sputterverfahren erzeugt werden. Eine Kombination der genannten Techniken kann ebenfalls vorteilhaft sein (z.B. HiPIMS und Bias oder erhöhte Depositionstemperatur und Bias). Die erhöhte lonenenergie beim HiPIMS-Sputterprozess kann gegebenenfalls dazu führen, dass auch bei geringerer Substrattemperatur (<100°C, bevorzugt nahe Raumtemperatur) ein Nanokomposit gebildet wird.

Die transparenten Hartstoffschichten haben in der Regel eine höhere Brechzahl als Glas- oder Glaskeramiksubstrat und sind daher durch ihre leicht spiegelnde Wirkung auf dem Substrat zu erkennen.

Wurde der spiegelnde Eindruck hingegen als störend wahrgenommen, konnte ein Antireflex-Schichtsystem aus hoch- und niedrigbrechenden Schichten hergestellt werden, das entweder komplett oder nur teilweise aus Nanokompositschichten besteht.

## Patentansprüche

1. Glaskeramik, die wenigstens teilweise mit einer vor äußeren mechanischen Einflüssen schützenden Hartstoffschicht versehen ist,
**dadurch gekennzeichnet,**
**dass** die Hartstoffschicht wenigstens zwei nebeneinanderliegende, miteinander vermischte Materialphasen enthält, wobei wenigstens eine nanokristalline Phase und eine amorphe Phase vorhanden sind,
die Hartstoffschicht eine Härte von wenigstens 26 GPa und eine Schichtdicke von wenigstens 0,5 µm aufweist,
die Hartstoffschicht im Temperaturbereich von 200 °C bis 1000 °C chemisch beständig ist und, dass der thermischen Ausdehnungskoeffizienten α der Glaskeramik sich nicht mehr als +/- 20 % vom thermischen Ausdehnungskoeffizienten α der Hartstoffschicht unterscheidet.

2. Glaskeramik nach Anspruch 1,
**dadurch gekennzeichnet,**
**dass** die mittlere Korngröße der nanokristallinen Phase kleiner als 1000 nm, bevorzugt kleiner als 100 nm, und besonders bevorzugt 1 nm bis 50 nm ist.

3. Glaskeramik nach einem der vorhergehenden Ansprüche,
**dadurch gekennzeichnet,**
**dass** die amorphe Phase die nanokristalline Phase im Wesentlichen umgibt.

4. Glaskeramik nach einem der vorhergehenden Ansprüche,
**dadurch gekennzeichnet,**
**dass** die Hartstoffschicht eine Licht-Transmission im Wellenlängenbereich von 380 nm bis 780 nm von wenigstens 80 % bei einer Schichtdicke von 1,0 µm aufweist.

5. Glaskeramik nach einem der vorhergehenden Ansprüche,
**dadurch gekennzeichnet,**
**dass** die nanokristalline Phase und/oder die amorphe Phase aus einer nitridischen oder oxidischen Verbindung bestehen, insbesondere aus Aluminium-, Silizium-, Bor-, Zirkon-, und/oder Titannitrid und/oder-oxid oder eine nitridische bzw. oxidische Verbindung umfasst.

6. Glaskeramik nach einem der vorhergehenden Ansprüche,
**dadurch gekennzeichnet,**
**dass** die Hartstoffschicht mit wenigstens einer weiteren Schicht, insbesondere einer Antireflexschicht versehen ist.

7. Glaskeramik nach einem der vorhergehenden Ansprüche,
**dadurch gekennzeichnet,**
**dass** die Hartstoffschicht Teil einer Antireflexschicht ist

8. Glaskeramik nach einem der vorhergehenden Ansprüche,
**dadurch gekennzeichnet,**
**dass** die Glaskeramik eine Kochfläche, eine Sichtscheibe, insbesondere eine Kaminsichtscheibe, eine Schutzscheibe oder eine Abdeckscheibe ist.

9. Glaskeramik nach einem der vorhergehenden Ansprüche,
**dadurch gekennzeichnet,**
**dass** die Glaskeramik eine Lithium-Aluminium-Silikat-Glaskeramik ist.

10. Glaskeramik nach einem der vorhergehenden Ansprüche,
**dadurch gekennzeichnet,**
**dass** die Hartstoffschicht eine Härte von wenigstens 28 GPa, insbesondere von 30 GPa bis 50 GPa, aufweist.

11. Glaskeramik nach einem der vorhergehenden Ansprüche,
**dadurch gekennzeichnet,**
**dass** die Hartstoffschicht eine Schichtdicke von wenigstens 0,5 µm, vorzugsweise von wenigstens 1,0 µm bis 10 µm, aufweist.

12. Glaskeramik nach einem der vorhergehenden Ansprüche,
**dadurch gekennzeichnet,**
**dass** zwischen Glaskeramik und Hartstoffschicht wenigstens eine Haftvermittlerschicht und/oder eine Barriereschicht angeordnet sind.

13. Glaskeramik nach wenigstens einem der Ansprüche 1 bis 5 oder 8 bis 12, **dadurch gekennzeichnet,**
**dass** zur Erkennung der Hartstoffschicht der Brechungsindex n_{D} der Hartstoffschicht über dem Brechungsindex n_{D} der Glaskeramik liegt.

14. Glaskeramik nach einem der vorhergehenden Ansprüche,
**dadurch gekennzeichnet,**
**dass** der Anteil der kristallinen Phase größer als der der amorphen Phase in der Hartstoffschicht ist, insbesondere dass der Anteil der kristallinen Phase größer 50 Mol-% ist, bevorzugt mindestens 75 Mol-% und besonders bevorzugt mindestens 85 Mol-% beträgt.

15. Glaskeramik nach einem der vorhergehenden Ansprüche,
**dadurch gekennzeichnet,**
**dass** die Hartstoffschicht eine Lichttransmission im Wellenlängenbereich von 1 µm bis 20 µm von mindestens 50 %, bevorzugt von mindestens 65 %, und besonders bevorzugt von mindestens 80 % aufweist.

16. Glaskeramik nach einem der vorhergehenden Ansprüche,
**dadurch gekennzeichnet,**
**dass** die nanokristalline oder/und die amorphe Phase aus mehr als zwei Materialien bestehen.

17. Glaskeramik nach einem der vorhergehenden Ansprüche,
**dadurch gekennzeichnet,**
**dass** die nanokristalline Phase aus hauptsächlich Aluminiumnitrid und die amorphe Phase hauptsächlich aus Siliziumnitrid besteht und wenigstens eine der beiden Phasen neben Nitridionen auch Sauerstoffionen enthält.
